# FASCICULE DE BREVET EUROPEEN

(11) **EP 2 060 747 B1**
(45) Date de publication et mention de la délivrance du brevet: **02.01.2013**
(21) Numéro de dépôt: 08168709.7
(22) Date de dépôt: 10.11.2008
(51) Int. Cl.: F01D 21/04, F01D 5/02, F01D 25/16, F02C 7/06, F16B 39/00

(54) **Fixation d'un palier supportant un rotor sur une turbomachine**
Befestigung eines Lagers für einen Rotor auf einem Turbotriebwerk
Attachment of a bearing supporting a rotor on a turbomachine

(30) Priorité: 13.11.2007 FR 0707941
(43) Date de publication de la demande: 20.05.2009
(73) Titulaire: Snecma, 75015 Paris (FR)
(72) Inventeur: Girard, Manuel, Claude, Bertrand, 77000 Vaux le Penil (FR); Tribouiller, Jérôme, 38000 Grenoble (FR)
(74) Mandataire: Ilgart, Jean-Christophe

(56) Documents cités:
- EP-A- 1 653 051

## Description

### DOMAINE TECHNIQUE

La présente invention concerne la fixation d'un palier supportant un rotor sur une turbomachine.

Une turbomachine comporte un compresseur, une chambre de combustion et une turbine. Le rôle du compresseur est d'accroître la pression de l'air fourni à la chambre de combustion. Le rôle de la turbine est d'assurer l'entraînement en rotation du compresseur en prélevant une partie de l'énergie de pression des gaz chauds sortant de la chambre de combustion et en la transformant en énergie mécanique.

Le compresseur et la turbine sont constitués chacun d'un premier ensemble de pièces fixes, ou stator, et d'un second ensemble de pièces susceptible d'être mis en rotation par rapport au stator, ou rotor.

Le rotor du compresseur et le rotor de la turbine forment un ensemble solidairement relié par un arbre tournant. La rotation du rotor par rapport au stator est rendue possible au moyen de paliers, un palier étant un organe mécanique supportant et guidant un rotor, en particulier l'arbre de ce rotor. Un palier comporte une première partie fixée sur le stator et une seconde partie fixée sur l'arbre de rotor. Un roulement est disposé entre les deux parties du palier autorisant ainsi la rotation d'une partie du palier par rapport à l'autre. Le roulement peut par exemple être du type à billes, à rouleaux cylindriques ou à rouleaux coniques.

### ÉTAT DE LA TECHNIQUE ANTÉRIEURE

La fixation de la première partie du palier sur le stator s'effectue au moyen de brides présentes à la fois sur le stator et sur le palier. Ces brides comportent une pluralité d'orifices circulaires répartis circulairement et sont fixées l'une à l'autre par serrage au moyen d'une pluralité de boulons traversant les orifices circulaires des brides. Un boulon est un ensemble bien connu constitué d'une vis et d'un écrou.

Il est important que la liaison entre les brides ne soit pas perdue. En cas de perte de la liaison, les dommages sur la turbomachine peuvent être catastrophiques et sont susceptibles d'entraîner le rebut d'un grand nombre de pièces, voire de la totalité de la turbomachine. En effet, une perte de liaison, même faible, peut permettre au rotor de se déplacer vers l'aval de la turbomachine et ainsi entrer dangereusement en contact avec le stator.

Une cause de cette perte de liaison peut provenir, par exemple, d'un mauvais serrage d'une vis avec l'écrou correspondant. Selon des études effectuées par le demandeur, la perte de liaison peut également avoir pour origine un balourd se répercutant jusqu'au niveau de la fixation des brides précitées. EP 1653051 illustre l'état de la technique antérieure.

### EXPOSÉ DE L'INVENTION

Le problème que se propose de résoudre la présente invention est donc d'améliorer la fixation d'un palier supportant un rotor sur un stator de turbomachine en la rendant plus fiable et plus robuste, en particulier contre une perte de liaison.

A cet effet, l'invention se rapporte à un procédé de fixation d'un palier sur une turbomachine comportant un stator et un rotor, le palier comportant une première partie fixée sur le stator de la turbomachine au moyen d'une pluralité de vis et d'écrous, une seconde partie fixée sur le rotor, mobile en rotation selon un sens de rotation donné, et un roulement disposé entre les première et seconde parties du palier. Selon une caractéristique essentielle de l'invention, le procédé consiste à utiliser des vis ayant un sens de rotation de vissage contraire au sens de rotation du rotor.

L'avantage procuré par un choix judicieux du sens de vissage des vis est d'éviter le desserrage de celles-ci par communication des vibrations dues à un balourd du rotor de la turbomachine.

Un autre avantage de l'invention est que ce choix permet d'obtenir un auto-serrage des vis en profitant des effets du balourd du rotor.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe longitudinale d'une turbomachine ;
- la figure 2 est une vue d'un détail de la figure 1 représentant un palier ;
- la figure 3 est une vue schématique, vu dans le sens axial depuis l'arrière, d'orifices circulaires des brides dans lesquels est insérée une vis ;
- les figures 4A à 4H sont des vues schématiques successives représentant une vis dans des brides subissant les effets d'un balourd, vu dans le sens axial depuis l'arrière ;
- la figure 5 est une vue de côté d'une vis du type « à droite « ;
- la figure 6 est une vue de côté d'une vis du type « à gauche ».

### EXPOSÉ DÉTAILLÉ DE MODES DE RÉALISATION PREFERES

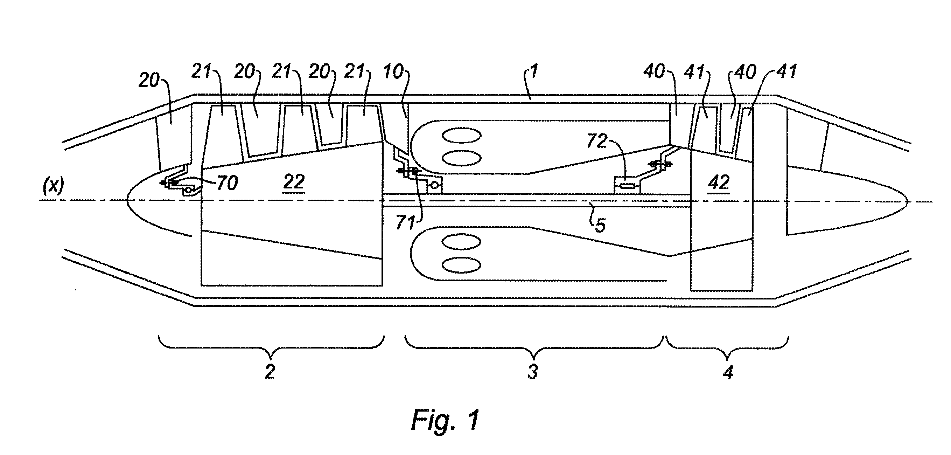

La figure 1 représente schématiquement une turbomachine comportant un carter fixe 1, un compresseur 2, une chambre de combustion 3 et une turbine 4. Le compresseur 2 et la turbine 4 comportent chacun au moins un étage constitué, d'une part, d'une roue mobile appartenant au rotor et, d'autre part, d'une roue fixe appartenant au stator, chaque roue étant équipée d'aubes, lesquelles sont appelées « aubes mobiles » 21 ou 41 pour le rotor, que ce soit sur le compresseur 2 ou sur la turbine 4, « aubes de redresseur » 20 sur le stator du compresseur 2, et « aubes de distributeur » 40 sur le stator de la turbine 4.

La forme des aubes 20, 21, 40 et 41 et leur arrangement dans la turbomachine sont tels que le rotor ne peut tourner que dans un seul sens en fonctionnement, le plus souvent dans le sens horaire lorsque l'on observe la turbomachine depuis l'arrière. Le rotor 22 du compresseur 2 et le rotor 42 de la turbine 5 sont reliés par un arbre tournant 5.

Plusieurs paliers 70, 71 et 72 autorisent la rotation du rotor par rapport au stator. Les paliers assurent l'interface entre le rotor et le stator. Les paliers 70 et 71 sont des paliers à billes et le palier 72 est un palier à rouleaux cylindriques. Selon le type de turbomachine, diverses variantes de palier peuvent être mises en oeuvre. Elles peuvent également être disposées selon une configuration différente. De telles différences n'ont pas d'impact sur le fonctionnement de l'invention.

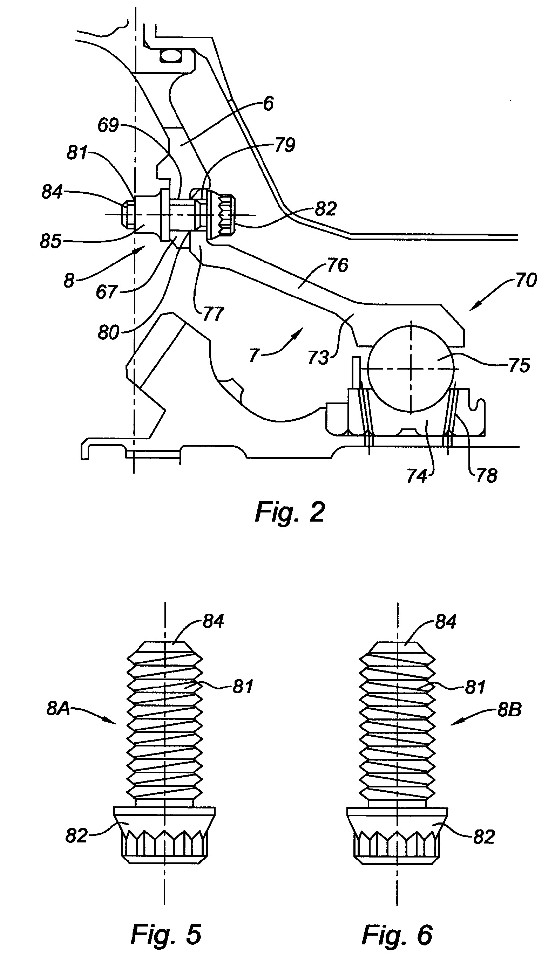

La figure 2 représente une vue détaillée d'un palier 7, par exemple le palier 71 de la figure 1, et de son environnement voisin. La fonction d'un palier 7 est de supporter et de guider une pièce tournante, telle qu'un arbre rotor 5. Un palier 7 comporte une première partie 73 et une seconde partie 74, les deux parties 73 et 74 étant jointes par un roulement 70, de type à billes 75 en l'occurence. Des moyens de lubrification 78 sont prévus au niveau de ce roulement 70.

La première partie 73 du palier 7, de forme tronconique, comporte une bride annulaire 77 qui est fixée sur une bride annulaire 67 d'une pièce 6 de forme tronconique solidaire du stator via un carter intermédiaire 10 relié au carter fixe 1. Les brides 67 et 77 s'étendent parallèlement l'une par rapport à l'autre selon un même plan radial, c'est-à-dire un plan perpendiculaire à l'axe (X) de la turbomachine et à l'axe (X) de rotation du rotor.

Chaque bride 67 et 77 comporte une pluralité d'orifices circulaires 69 et 79, chaque orifice circulaire 69 de la bride 67 du stator étant en regard d'un orifice circulaire 79 de la bride 77 du palier 7. Les orifices circulaires 69 et 79 permettent de solidariser les brides 67 et 77 l'une par rapport à l'autre au moyen de boulons 8, un boulon 8 étant constitué d'une vis 80 et d'un écrou 85. Dans l'exemple de la figure 2, la tige filetée 81 de la vis 80 traverse successivement, d'aval en amont, la bride 77 du palier 7 et la bride 67 du stator via leurs orifices circulaires respectifs 79 et 69 en laissant dépasser la tête de vis 82 depuis la face aval de la bride 77 et en laissant dépasser l'extrémité 84 de la tige filetée 81 de la vis 80 en amont de la face amont de la bride 67 du stator. L'écrou 85 coopère avec la vis 80 en se vissant à l'extrémité 84 de la tige filetée 81 de la vis 80, ce qui permet le serrage des brides 67 et 77 l'une par rapport à l'autre.

Des balourds peuvent se former de manière accidentelle lorsque la turbomachine est en fonctionnement, c'est-à-dire pendant la rotation du rotor. Un balourd est un phénomène de déséquilibre du rotor dont le centre de gravité ne se situe pas exactement sur l'axe de rotation comme il devrait l'être. Au sens de la présente invention, le balourd désigne plus particulièrement la partie du rotor qui est surchargée en terme de masse, provoquant ainsi le déséquilibre. En présence d'un déséquilibre de masse, le centre de gravité est excentré par rapport à l'axe (X) du rotor.

Dans le cas d'une turbomachine, ce balourd peut générer des efforts importants qui sont communiqués aux brides 67 et 77 puis retransmis au boulons 8. Plusieurs effets peuvent être produits sous l'action de ces efforts dynamiques.

Un premier effet est une déformation des brides 67 et 77 qui tendent vers une ovalisation, c'est-à-dire un défaut de la circularité de leur révolution. Ce premier effet provoque également une ovalisation des orifices circulaires 69 et 79 sur les brides 67 et 77.

Un deuxième effet est la mise en compression axiale de la liaison dans la zone de la circonférence des brides 67 et 77 où se situe le balourd et une traction axiale de la liaison associée dans la zone opposée de la circonférence. Cet effort de traction axiale provoque le plaquage de l'écrou 85 sur la face amont de la bride 67 du stator. Ce plaquage tend à bloquer l'écrou 85 en rotation, lequel est ainsi immobilisé par rapport au stator.

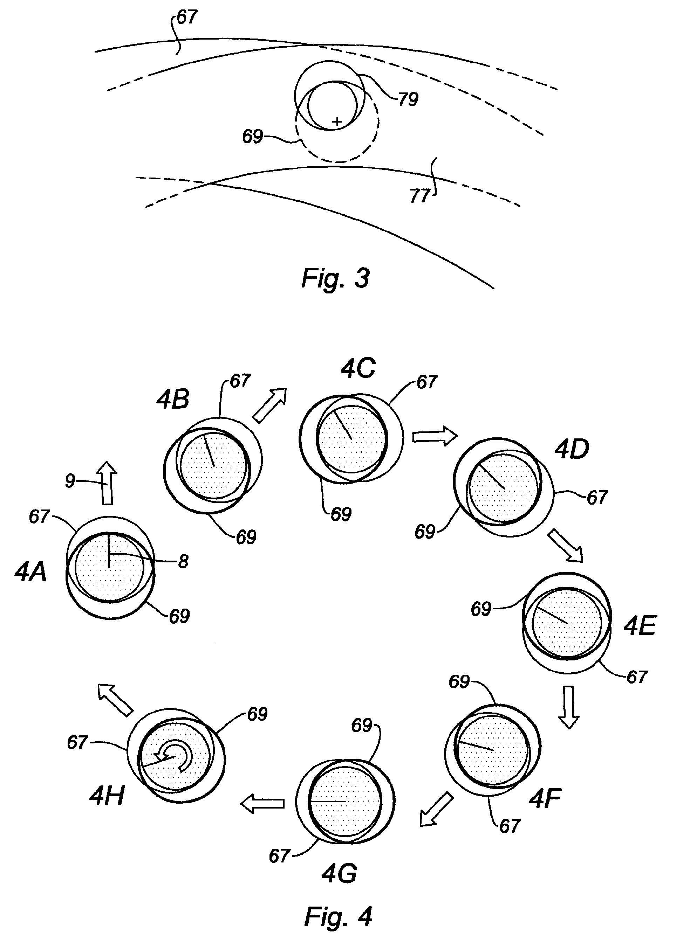

Un troisième effet est un déplacement relatif des brides 67 et 77 l'une par rapport à l'autre dans le plan radial, autrement dit, les brides 67 et 77 glissent l'une par rapport à l'autre sous l'effet des efforts radiaux. Ce déplacement étant généré par le balourd, la bride 77 du palier 7 décrit un mouvement circulaire autour de l'axe de rotation et à la même vitesse de rotation. De même, chaque orifice circulaire 79 de la bride 77 du palier 7 décrit également un mouvement circulaire autour de l'axe de l'orifice circulaire 69 de la bride 79 du stator en regard duquel il est situé. Lorsque cet effet se produit, la vis 80 se retrouve coincée entre les deux brides 67 et 77, comme représenté de manière exagérée sur la figure 3. En se déplaçant selon un mouvement circulaire, les brides 67 et 77 produisent un effet d'engrenage entre la vis 80 d'une part et l'orifice circulaire 79 de la bride 77 du palier 7 d'autre part, effet qui tend à faire tourner la vis 80 dans le sens opposé au sens de rotation du rotor.

La combinaison de l'effet d'engrenage de la bride 79 sur la vis 80 et du blocage de l'écrou 85 en rotation entraîne une rotation de la vis 80. Cet effet est illustré sur les figures 4A à 4H.

Les figures 4A à 4H représentent, de manière schématique et en vue arrière, les orifices circulaires 69 et 79 des brides respectives 67 et 77 et la vis 80, plus exactement sa tige filetée 81 prise entre les surfaces internes des orifices 69 et 79. La direction du balourd depuis la vis 80, lequel balourd suit le sens de rotation du rotor selon une même vitesse, est représentée par la flèche 9. L'orifice circulaire 79 décrit donc un mouvement circulaire autour de l'axe de l'orifice circulaire 69. Les forces de frottement importantes entre la tige filetée 81 de la vis 80 et les surfaces intérieures des orifices circulaires 69 et 79, combinées avec le mouvement des brides 67 et 77 l'une par rapport à l'autre, entraînent un mouvement de rotation de la vis 80 autour de son propre axe. Le mouvement de rotation de la vis 80 s'effectue dans le sens anti-horaire qui est contraire au mouvement de rotation du balourd et du rotor qui s'effectuent dans le sens horaire, comme illustré sur les figures 4A à 4H successives au moyen d'un repère angulaire 88 sur la vis 80.

Ce mouvement de rotation de la vis 80 autour de son axe, associé au blocage en rotation de son écrou 85 est susceptible de conduire au dévissage de la vis 80 lorsque le sens de dévissage de celle-ci correspond à une rotation dans le sens anti-horaire, comme cela est le cas pour la vis 80A représentée sur la figure 5. Par ailleurs, la vitesse de ce dévissage est rapide puisqu'elle est liée à la vitesse de rotation du rotor.

La vis 80A représentée sur la figure 5 est dite « vis à droite » en raison de l'orientation à droite des filets, pris dans le du sens de vissage de la vis 80A, c'est-à-dire depuis la tête de vis 82 vers l'extrémité opposée 84. Pour des raisons identiques, la vis 80B de la figure 6 est dite « vis à gauche ». Toutefois, la vis à droite 8A est standard et est donc nettement plus courante sur le marché, la vis à gauche 8B étant rarement, voire même jamais, distribuée par les fabricants de vis.

Pour éviter le phénomène de dévissage décrit ci-dessus, la solution proposée par l'invention consiste à utiliser des vis 80 dont le sens de vissage est contraire au sens de rotation du rotor. Pour la mise en oeuvre de cette solution, deux modes de réalisation sont envisageables.

Selon un premier mode de réalisation, si un boulon de type vis à droite 8A est utilisé, il suffit d'inverser l'orientation du boulon 8, c'est-à-dire en disposant le boulon 8 de sorte que la tête de vis 82 soit disposée en amont et l'extrémité 84 de la tige filetée 81 en aval, contrairement à ce que montre la figure 2. Toutefois, en raison de l'ordre de montage des différentes pièces constituant la turbomachine, il peut se révéler impossible de choisir librement l'orientation des boulons 8. Le deuxième mode de réalisation de l'invention permet de remédier à ce problème.

Selon ce deuxième mode de réalisation, il suffit de monter, sur les brides 67 et 77, un boulon 8 de type à vis gauche 8B en lieu et place de la vis à droite 8A en disposant toujours la tête de vis 82 en aval et l'extrémité 84 de la tige filetée 81 en amont, en référence à la figure 2.

Dans les deux modes de réalisation de l'invention, la rotation de la vis 8, dûe au balourd tournant dans le sens anti-horaire, n'entraîne pas le dévissage de celle-ci. Au contraire, l'effet inverse se produit, à savoir un vissage de la vis 8. Un autre avantage de l'invention réside donc dans l'auto-serrage des vis 8 en profitant des effets du balourd du rotor.

Le tableau ci-dessous résume le type de vis à utiliser en fonction, d'une part, de la rotation du rotor, dans le sens horaire ou en sens anti-horaire, vu depuis l'arrière de la turbomachine, et, d'autre part, de la disposition du boulon 8, avec l'écrou 85 en amont et la tête de vis 82 en aval ou l'inverse, dans la turbomachine.

| | | Sens de rotation du rotor | |
|---|---|---|---|
| | | Sens horaire | Sens anti-horaire |
| Type de boulon | écrou en amont et tête de vis en aval | Vis à gauche | Vis à droite |
| | écrou en aval et tête de vis en amont | Vis à droite | Vis à gauche |

## Revendications

1. Procédé de fixation d'un palier (7) sur une turbomachine comportant un stator et un rotor, le palier (7) comportant :
- une première partie (73) fixée sur le stator de la turbomachine au moyen d'une pluralité de vis (80) et d'écrous (85),
- une seconde partie (74) fixée sur le rotor, mobile en rotation selon un sens de rotation donné,
- et un roulement (70) disposé entre les première (73) et seconde (74) parties du palier,
ledit procédé étant **caractérisé en ce qu'**il consiste à utiliser des vis (80) ayant un sens de rotation de vissage contraire au sens de rotation du rotor.

2. Procédé de fixation d'un palier (7) sur une turbomachine selon la revendication 1, **caractérisé en ce que**, lorsque le sens de rotation du rotor est le sens horaire vu depuis l'arrière de la turbomachine, la tête (82) de chaque vis (80) se situe en aval et l'écrou (85) correspondant se situe en amont, et les vis (80) utilisées sont du type vis à gauche.

3. Procédé de fixation d'un palier (7) sur une turbomachine selon la revendication 1, **caractérisé en ce que**, lorsque le sens de rotation du rotor est le sens horaire vu depuis l'arrière de la turbomachine, la tête (82) de chaque vis (80) se situe en amont et l'écrou (85) correspondant se situe en aval, et les vis (80) utilisées sont du type vis à droite.

4. Procédé de fixation d'un palier (7) sur une turbomachine selon la revendication 1, **caractérisé en ce que**, lorsque le sens de rotation du rotor est le sens anti-horaire vu depuis l'arrière de la turbomachine, la tête (82) de chaque vis (80) se situe en aval et l'écrou (85) correspondant se situe en amont, et les vis (80) utilisées sont du type vis à droite.

5. Procédé de fixation d'un palier (7) sur une turbomachine selon la revendication 1, **caractérisé en ce que**, lorsque le sens de rotation du rotor est le sens anti-horaire vu depuis l'arrière de la turbomachine, la tête (82) de chaque vis (80) se situe en amont et l'écrou (85) correspondant se situe en aval, et les vis (80) utilisées sont du type vis à gauche.

6. Procédé de fixation d'un palier sur une turbomachine selon l'une des revendications précédentes, **caractérisé en ce que** la première partie (73) du palier (7) comporte une première bride (77) et le stator de la turbomachine comporte une seconde bride (67), les première (77) et seconde (67) brides étant serrées l'une contre l'autre et comportant des orifices circulaires respectifs (67 et 69) traversés par les vis (80).

## Claims

1. A method for attaching a bearing (7) on a turbomachine comprising a stator and a rotor, the bearing (7) including:
- a first portion (73) attached on the stator of the turbomachine by a plurality of screws (80) and nuts (85),
- un second portion (74) attached on the rotor, rotationally movable in one given rotation direction,
- and a rolling bearing (70) provided between the first (73) and second (74) portions of the bearing,
said method being **characterized by** the use of screws (80) having a screwing rotation direction contrary to the rotation direction of the rotor.

2. The method for attaching a bearing (7) on a turbomachine according to claim 1, **characterized in that**, when the rotor rotation direction goes clockwise as seen from behind the turbomachine, the head (82) of each screw (80) is located downstream and the corresponding nut (85) is located upstream, and the screws (80) used are left-hand screws.

3. The method for attaching a bearing (7) on a turbomachine according to claim 1, **characterized in that**, when the rotor rotation direction goes clockwise as seen from behind the turbomachine, the head (82) of each screw (80) is located upstream and the corresponding nut (85) is located downstream, and the screws (80) used are right-hand screws.

4. The method for attaching a bearing (7) on a turbomachine according to claim 1, **characterized in that**, when the rotor rotation direction goes counter clockwise as seen from behind the turbomachine, the head (82) of each screw (80) is located downstream and the corresponding nut (85) is located upstream, and the screws (80) used are right-hand screws.

5. The method for attaching a bearing (7) on a turbomachine according to claim 1, **characterized in that**, when the rotor rotation direction goes counter clockwise as seen from behind the turbomachine, the head (82) of each screw (80) is located upstream and the corresponding nut (85) is located downstream, and the screws (80) used are left-hand screws.

6. The method for attaching a bearing (7) on a turbomachine according to any of the preceding claims, **characterized in that** the first portion (73) of the bearing (7) comprises a first flange (77) and the stator of the turbomachine comprises a second flange (67), the first (77) and second (67) flanges being clamped against each other and having respective circular ports (67 and 69) with screws (80) therethrough.

## Patentansprüche

1. Verfahren zur Befestigung eines Lagers (7) in einem einen Stator und einen Rotor umfassenden Turbotriebwerk, wobei das Lager (7) umfasst:
- einen ersten Teil (73), befestigt an dem Stator des Turbotriebwerks mittels einer Vielzahl von Schrauben (80) und Muttern (85),
- einen zweiten, an dem Rotor befestigten Teil (74), drehbar in einer bestimmten Drehrichtung,
- und ein Wälz- bzw. Kugellager (70), angeordnet zwischen dem ersten (73) und dem zweiten (74) Teil des Lagers,
wobei das genannte Verfahren **dadurch gekennzeichnet ist, dass** es darin besteht, Schrauben (80) zu verwenden, deren Verschraubungs-Drehrichtung der Drehrichtung des Rotors entgegengesetzt ist.

2. Verfahren zur Befestigung eines Lagers (7) in einem Turbotriebwerk nach Anspruch 1, **dadurch gekennzeichnet**, wenn die Drehung des Rotors im Uhrzeigersinn erfolgt, gesehen von der Rückseite des Turbotriebwerks, dass der Kopf (82) jeder Schraube (80) der Rückseite zugewandt ist und die entsprechende Mutter (85) der Vorderseite zugewandt ist und die verwendeten Muttern (80) vom linksgängigen Typ sind.

3. Verfahren zur Befestigung eines Lagers (7) in einem Turbotriebwerk nach Anspruch 1, **dadurch gekennzeichnet**, wenn die Drehung des Rotors im Uhrzeigersinn erfolgt, gesehen von der Rückseite des Turbotriebwerks, dass der Kopf (82) jeder Schraube (80) der Vorderseite zugewandt ist und die entsprechende Mutter (85) der Rückseite zugewandt ist und die verwendeten Muttern (80) vom rechtsgängigen Typ sind.

4. Verfahren zur Befestigung eines Lagers (7) in einem Turbotriebwerk nach Anspruch 1, **dadurch gekennzeichnet**, wenn die Drehung des Rotors im Gegenuhrzeigersinn erfolgt, gesehen von der Rückseite des Turbotriebwerks, dass der Kopf (82) jeder Schraube (80) der Rückseite zugewandt ist und die entsprechende Mutter (85) der Vorderseite zugewandt ist und die verwendeten Muttern (80) vom rechtsgängigen Typ sind.

5. Verfahren zur Befestigung eines Lagers (7) in einem Turbotriebwerk nach Anspruch 1, **dadurch gekennzeichnet**, wenn die Drehung des Rotors im Gegenuhrzeigersinn erfolgt, gesehen von der Rückseite des Turbotriebwerks, dass der Kopf (82) jeder Schraube (80) der Vorderseite zugewandt ist und die entsprechende Mutter (85) der Rückseite zugewandt ist und die verwendeten Muttern (80) vom linksgängigen Typ sind.

6. Verfahren zur Befestigung eines Lagers in einem Turbotriebwerk nach einem der vorhergehenden Ansprüche, **dadurch gekennzeichnet, dass** der erste Teil (73) des Lagers (7) einen ersten Flansch (77) umfasst, und der Stator der Turbomaschine einen zweiten Flansch (67) umfasst, wobei der erste (77) und der zweite (67) Flansch zusammengespannt sind und von den Schrauben (80) durchquerte runde Öffnungen (67 und 69) umfassen.
